# EUROPÄISCHE PATENTANMELDUNG

(11) **EP 1 209 129 A2**
(43) Veröffentlichungstag der Anmeldung: **29.05.2002**
(21) Anmeldenummer: 01127554.2
(22) Anmeldetag: 19.11.2001
(51) Int. Cl.: C03B 19/14

(54) **Verfahren und Vorrichtung zur Herstellung eines Quarzglaskörpers**

(30) Priorität: 24.11.2000 DE 10058558
(71) Anmelder: Heraeus Quarzglas GmbH & Co. KG, 63450 Hanau (DE)
(72) Erfinder: Trommer, Martin, 36381 Schlüchtern (DE); Schäfer,Jürgen, 63840 Hausen (DE); Bauscher, Heinz, 63505 Langenselbold (DE); Englisch, Wolfgang, Dr., 65779 Kelkheim (DE)
(74) Vertreter: Staudt, Armin, Dipl.-Ing.

(57) **Zusammenfassung**

Bei einem bekannten Verfahren für die Herstellung eines Quarzglaskörpers wird einem Abscheidebrenner (7) eine siliziumhaltige Ausgangsverbindung zugeführt, in einer dem Abscheidebrenner (7) zugeordneten Brennerflamme (6) daraus SiO₂-Partikel gebildet, diese auf einer kuppenförmigen Ablagerungsfläche (9) eines um eine Mittelachse (3) rotierenden und mit geregelter Abzugsgeschwindigkeit in Richtung der Mittelachse (3) abgezogenen Trägers (2) abgeschieden und unter Bildung des Quarzglaskörpers (8) verglast, wobei der Abstand zwischen dem Abscheidebrenner (7) und der Ablagerungsfläche (9) geregelt wird. Um hiervon ausgehend die Herstellung eines Quarzglaskörpers nach dem VAD-Prozess mit möglichst homogenen Materialeigenschaften ermöglichen wir erfindungsgemäß vorgeschlagen, dass die geometrische Form der Ablagerungsfläche (9) während des Abscheidens beibehalten wird. Eine erfindungsgemäße Vorrichtung, mittels der derartige Quarzglaskörper reproduzierbar hergestellt werden können zeichnet sich dadurch aus, dass Mittel (11; 12; 17; 19) zur Beibehaltung der geometrischen Form der Ablagerungsfläche (9) während des Abscheidens vorgesehen sind.

## Beschreibung

Die vorliegende Erfindung betrifft ein Verfahren für die Herstellung eines Quarzglaskörpers, indem einem Abscheidebrenner eine siliziumhaltige Ausgangsverbindung zugeführt, in einer dem Abscheidebrenner zugeordneten Brennerflamme daraus SiO₂-Partikel gebildet, diese auf einer kuppenförmigen Ablagerungsfläche eines um eine Mittelachse rotierenden und mit geregelter Abzugsgeschwindigkeit in Richtung der Mittelachse abgezogenen Trägers abgeschieden und unter Bildung des Quarzglaskörpers verglast werden, wobei der Abstand zwischen dem Abscheidebrenner und der Ablagerungsfläche geregelt wird.

Weiterhin betrifft die Erfindung eine Vorrichtung zur Herstellung eines Quarzglaskörpers, mit einem um eine Mittelachse rotierbaren Träger, der mittels einer Verschiebevorrichtung mit regelbarer Abzugsgeschwindigkeit in Richtung der Mittelachse verschiebbar ist, mit einem Abscheidebrenner zur Erzeugung von SiO₂-Partikeln in einer dem Abscheidebrenner zugeordneten Brennerflamme, mittels dem auf einer kuppenförmigen Ablagerungsfläche des Trägers SiO₂-Partikel abgeschieden und unter Bildung des Quarzglaskörpers verglast werden, mit einer auf die Ablagerungsfläche gerichteten optischen Erfassungseinrichtung, und mit einer Regeleinrichtung zur Regelung des Abstands zwischen dem Abscheidebrenner und der Ablagerungsfläche.

Verfahren zur Herstellung eines Körpers aus Quarzglas durch axiale Abscheidung von SiO₂-Partikeln auf der Stirnfläche eines um eine Mittelachse rotierenden Trägers sind unter der Bezeichnung "VAD-Verfahren" (Vapor Axial Deposition) allgemein bekannt. Die mittels dieses Verfahrens hergestellten Quarzglaskörper werden zum Beispiel als Vorformen für optische Fasern oder als Halbzeug für die Herstellung hochreiner Bauteile aus synthetischem Quarzglas für Anwendungen auf dem Gebiet der Optik oder der Halbleitertechnologie eingesetzt.

Ein Verfahren und eine Vorrichtung der genannten Gattung sind aus der DE-A 42 03 287 bekannt. Zur Herstellung eines Quarzglaskörpers ist ein Träger mit horizontal orientierter Rotationsachse vorgesehen, ein Motor, mit welchem der Träger mit regelbarer Abzugsgeschwindigkeit in Richtung der Rotationsachse verschiebbar ist, ein Flammhydrolysebrenner, dem SiCl₄, Sauerstoff und Brenngase zugeführt werden und eine Mess- und Regeleinrichtung, mittels der der Abstand zwischen dem Träger und dem Flammhydrolysebrenner kontinuierlich gemessen und konstant gehalten wird.

Die Brennerflamme des Flammhydrolysebrenners ist auf die Stirnseite des rotierenden Trägers gerichtet, so dass die Hauptausbreitungsrichtung der Brennerflamme parallel zur Rotationsachse verläuft (Brennerwinkel = Null Grad). SiCl₄ wird in der Brennerflamme zu SiO₂ umgesetzt, das in Form von SiO₂-Partikeln auf dem Träger abgeschieden und unmittelbar unter Bildung des Quarzglaskörpers verglast wird. Durch schichtweises Abscheiden und Verglasen der SiO₂-Partikel auf der Stirnseite des Trägers bildet sich ein Quarzglaskörper mit kuppenförmiger Ablagerungsfläche, die eine konvexe Krümmung in Richtung der Rotationsachse aufweist.

Die Mess- und Regeleinrichtung umfasst eine Lichtschranke mit einem senkrecht zur Rotationsachse verlaufenden und die Ablagerungsfläche tangierenden Lichtstrahl. Sobald die kuppenförmige Ablagerungsfläche die Lichtschranke dauerhaft unterbricht, wird die Abzugsgeschwindigkeit erhöht, bis der Soll-Abstand zwischen der Ablagerungsfläche des Trägers und dem Flammhydrolysebrenner wieder eingestellt ist.

Mittels dieser Regelung ist jedoch eine unbeabsichtigte Vergrößerung des Soll-Abstands nicht erfassbar, da die Lichtschranke in dem Fall nicht unterbrochen wird. Dieser Nachteil wird bei einem ähnlichen VAD-Verfahren zur Herstellung eines Quarzglaskörpers gemäß der US-A 6,018,964 vermieden, indem eine IR-Kamera eingesetzt wird, die den Abstand zwischen dem Flammhydrolysebrenner und einem Träger mit vertikal orientierter Rotationsachse kontinuierlich überwacht.

Jedoch treten auch bei sorgfältiger Einhaltung des Abstands zwischen Abscheidebrenner und Ablagerungsfläche in den VAD-Quarzglaskörpern radiale und insbesondere schichtförmige, axiale Inhomogenitäten auf. Derartige Inhomogenitäten werden durch Änderungen optischer Eigenschaften und der chemischen Zusammensetzung des Quarzglases während des Abscheideprozesses hervorgerufen. Häufig werden Gradienten in den Wasserstoff- und Hydroxylgruppen-Konzentrationen über die Länge des Quarzglaskörpers beobachtet. Derartige axiale Stoffgradienten wirken sich auch auf die optischen Eigenschaften aus, die auch noch zusätzlich durch die axiale und radiale Verteilung der Dichte und der sogenannten fiktiven Temperatur, die im wesentlichen durch das Abkühlverhalten des Quarzglaskörpers bestimmt wird, beeinflusst werden.

Der Erfindung liegt daher die Aufgabe zugrunde, ein Verfahren anzugeben, das die Herstellung eines Quarzglaskörpers nach dem VAD-Prozess mit möglichst homogenen Materialeigenschaften ermöglicht. Weiterhin liegt der Erfindung die Aufgabe zugrunde, eine Vorrichtung bereitzustellen, mittels der derartige Quarzglaskörper reproduzierbar hergestellt werden können.

Hinsichtlich des Verfahrens wird diese Aufgabe ausgehend von dem eingangs genannten Verfahren erfindungsgemäß dadurch gelöst, dass die geometrische Form der Ablagerungsfläche während des Abscheidens beibehalten wird.

Es hat sich gezeigt, dass die geometrische Form der Ablagerungsfläche (im folgenden auch als "Kuppengeometrie" bezeichnet) für die Stabilität des VAD-Prozesses und für die Materialhomogenität des resultierenden Quarzglaskörpers entscheidend ist. Änderungen der Kuppengeometrie während des Abscheideprozesses gehen mit Änderungen der Materialeigenschaften des Quarzglaskörpers einher.

Eine Erklärung für den Einfluss der geometrischen Form der Ablagerungsfläche auf die Stabilität des VAD-Prozesses und auf die axiale Materialhomogenität besteht darin, dass die radiale Temperaturverteilung über der Ablagerungsfläche von der Kuppengeometrie abhängt. Die Temperaturverteilung wirkt sich wiederum unmittelbar und mittelbar auf die Materialeigenschaften des Quarzglaskörpers aus. Für jeden Punkt auf der Ablagerungsfläche hängt beispielsweise der Einbau von Hydroxylgruppen, von Wasserstoff oder die Bildung von SiH-Gruppen von der erreichten Maximaltemperatur während der Abscheidung und dem zeitlichen Verlauf der Abkühlung ab. Damit beeinflusst die Temperaturverteilung über der Ablagerungsfläche die radiale chemische Zusammensetzung und damit auch die optischen Eigenschaften des Quarzglaskörpers. Darüber hinaus bestimmt die Temperatur auch die radiale Dichteverteilung und die fiktive Temperatur des Quarzglases. Änderungen der radialen Temperaturverteilung während des Abscheideprozesses führen somit zu radialen und insbesondere zu axialen Änderungen der genannten Materialeigenschaften.

Erfindungsgemäß wird die Kuppengeometrie daher während des Abscheideprozesses beibehalten. Damit ist gemeint, dass die Kuppengeometrie möglichst konstant gehalten wird. Bei Änderungen der Kuppengeometrie werden Maßnahmen ergriffen, um dieser Änderung entgegenzuwirken. Änderungen der Kuppengeometrie können im Verlauf des Abscheideprozesses - etwa wegen der Erwärmung der Umgebung und aufgrund zunehmendem Volumen und Gewicht des sich bildenden Quarzglaskörpers auftreten. Insbesondere bei einem VAD-Prozess mit horizontaler Rotationsachse kann sich der Quarzglaskörper mit zunehmender Länge durchbiegen, was zu einer Verschiebung der Auftreffpunkts der Brennerflamme auf der Ablagerungsfläche und damit regelmäßig zu einer wesentlichen Änderung der Kuppengeometrie führt.

Die Konstanz der Kuppengeometrie während des Abscheideprozesses ist für den Erfolg der erfindungsgemäßen Lehre - das heißt, für ein homogene axiale und radiale Verteilung der Materialeigenschaften - entscheidend; erst in zweiter Linie spielen andere Parameter, wie beispielsweise die konkrete Form der Kuppe eine Rolle.

Die Kuppengeometrie wird "während des Abscheideprozesses" beibehalten. Damit ist derjenige Zeitabschnitt des Abscheideprozesses gemeint, während dem die nutzbare Länge des Quarzglaskörpers - die sich durch möglichst konstante Materialeigenschaften auszeichnet - abgeschieden wird.

Bei einer bevorzugten Weiterbildung des erfindungsgemäßen Verfahrens werden Form, Stöchiometrie und Hauptausbreitungsrichtung der Brennerflamme, sowie die Position des Auftreffpunkts der Brennerflamme auf der Ablagerungsfläche derart eingestellt, dass die geometrische Form der Ablagerungsfläche während des Abscheidens beibehalten wird. Es hat sich gezeigt, dass die Kuppengeometrie im wesentlichen durch die genannten Parameter beeinflusst wird. Diese Parameter sind daher besonders geeignet als Stellgrößen, mittels denen einer Veränderung der Kuppengeometrie im Verlauf des Abscheideprozesses entgegengewirkt werden kann. Hierzu reicht es aus, wenn einer der Parameter als Stellgröße eingesetzt wird und die übrigen Parameter konstant gehalten werden. Darüber hinaus hängt die Kuppengeometrie vom Abstand zwischen Abscheidebrenner und Ablagerungsfläche ab. Dieser wird beim erfindungsgemäßen Verfahren konstant gehalten.

Der Ausdruck "Stöchiometrie der Brennerflamme" bezeichnet deren chemische Zusammensetzung.

Bei einer besonders bevorzugten Verfahrenswiese wird die Position des Auftreffpunkts der Brennerflamme auf der Ablagerungsfläche geregelt. Es hat sich gezeigt, dass der Auftreffpunkt der Brennerflamme auf der Ablagerungsfläche für die Stabilität des VAD-Prozesses und die Materialhomogenität des Quarzglaskörpers entscheidend ist. Denn der Auftreffpunkt der Brennerflamme hat wesentlichen Einfluss auf die radiale Temperaturverteilung über der Ablagerungsfläche sowie deren geometrische Form. Der Auftreffpunkt wird durch den Schnittpunkt von Hauptausbreitungsrichtung der Brennerflamme und Ablagerungsfläche definiert.

Der Auftreffpunkt auf der Ablagerungsfläche wird im wesentlichen durch die Position des Abscheidebrenners zu ihr und durch die Form und Richtung der Brennerflamme bestimmt. Die Form und Richtung der Brennerflamme kann durch vielerlei Maßnahmen, etwa durch Gasströme durch den Abscheidebrenner oder außerhalb davon, durch mechanische Leitkörper oder auch durch Anlegen von elektrischen Feldern variiert werden, ohne dass hierzu der Abscheidebrenner selbst bewegt werden muss. Derartige Maßnahmen sind für eine Einstellung des Auftreffpunkts grundsätzlich geeignet und sind von den folgenden Erläuterungen umfasst. Der Einfachheit halber wird jedoch im folgenden von einer Brennerflamme ausgegangen wird, die während des Abscheideprozesses hinsichtlich ihrer Form und Richtung konstant gehalten wird, so dass eine örtliche Verschiebung der Brennerflamme stets mit einer entsprechenden Verschiebung des Abscheidebrenners einhergeht.

Die Brennerflamme kann in einem vorgegebenen Bewegungsablauf über der Ablagerungsfläche geführt werden, mit der Maßgabe, dass die geometrische Form der Ablagerungsfläche beibehalten wird. Im einfachsten Fall wird der Auftreffpunkt auf der Ablagerungsfläche nur im Fall einer unerwünschten Änderung der Kuppengeometrie verändert, um die vorgegebene Kuppengeometrie wiederherzustellen. Wegen des deutlichen Einflusses des Auftreffpunkts auf die Kuppengeometrie kann es ausreichen, die Position des Auftreffpunkts der Brennerflamme auf der Ablagerungsfläche konstant zu halten, um dadurch gleichzeitig eine konstante Kuppengeometrie der Ablagerungsfläche zu gewährleisten.

Es wird eine Verfahrensweise bevorzugt, bei welcher durch optische Abbildung von mindestens einem Teil der Ablagerungsfläche eine Kuppenkontur erhalten, und daraus ein Maß für die aktuelle geometrische Form der Ablagerungsfläche ermittelt wird. Dabei wird die Ablagerungsfläche fortlaufend optisch erfasst und deren Profil als "Kuppenkontur" abgebildet und vermessen. Bei einer Abweichung der erfassten Kuppenkontur von einer Sollform wird eine der oben genannten Parameter verändert, so dass sich die Sollform wieder einstellt. Das Vermessen der Kuppenkontur und deren Auswertung erfolgt zweckmäßig mittels digitaler Bildverarbeitung. Die fortlaufende Erfassung der Kuppenkontur in diesem Sinne kann sowohl kontinuierlich als auch nach vorgegebenen Zeitintervallen erfolgen. Je kürzer gegebenenfalls die Zeitintervalle gewählt werden, umso genauer lässt sich die Form der Ablagerungsfläche beibehalten.

Vorzugsweise wird das Maß für die aktuelle geometrische Form der Ablagerungsfläche anhand einer Messvorschrift ermittelt, die eine Ermittlung mindestens zweier voneinander beabstandeter Messpunkte auf der Kuppenkontur umfasst, wovon der erste Messpunkt auf Höhe der Mittellinie, und der zweite Messpunkt mit vorgegebenem radialen Abstand von der Mittellinie ermittelt wird. Der axiale Abstand zwischen erstem und zweitem Messpunkt ergibt eine einfache Maßzahl für die Krümmung der Ablagerungsfläche. Je mehr Messpunkte das Messprofil umfasst, umso genauer lässt sich die Kuppenkontur vermessen. Änderungen der Form der Ablagerungsfläche sind anhand der Kuppenkontur frühzeitig erkennbar. Dabei ändert sich häufig zunächst die Kuppenspitze, so dass der erste Messpunkt auf der Kuppenkontur in Höhe der Mittellinie eine besonders empfindliche Regelung ermöglicht.

Änderungen der Form der Ablagerungsfläche sind häufig ein Anzeichen für eine unbeabsichtigte Änderung der Position des Auftreffpunkts der Brennerflamme. Daher ist bei einer besonders bevorzugten Verfahrensweise zur Beibehaltung der geometrischen Form der Ablagerungsfläche eine Positionsregelung vorgesehen, bei der die Abzugsgeschwindigkeit oder die Position des Abscheidebrenners als Stellgröße herangezogen werden. Diese Parameter wirken sich auf die Position des Auftreffpunkts der Brennerflamme unmittelbar aus, so dass eine empfindliche und genaue Regelung ermöglicht wird. Die Änderung der Abzugsgeschwindigkeit wirkt sich auf die radiale Position der Brennerflamme auf der Ablagerungsfläche jedoch nur dann aus, wenn die Brennerflamme nicht frontal auf die Stirnseite des Trägers gerichtet ist, sondern in einem schrägen Winkel auf die Ablagerungsfläche auftrifft. In dem Fall ändert sich mit dem Abstand zwischen Abscheidebrenner und Träger auch der Auftreffpunkt der Brennerflamme auf der Ablagerungsfläche.

Bei einer besonders bevorzugten Ausgestaltung des erfindungsgemäßen Verfahrens wird die Brennerflamme derart auf die Ablagerungsfläche gerichtet, dass die Hauptausbreitungsrichtung der Brennerflamme und die Mittelachse des Trägers einen Brennerwinkel im Bereich zwischen 5 Grad und 85 Grad einschließen und dass der Brennerwinkel auf einem vorgegebenen Sollwert gehalten wird. Bei dieser Verfahrensweise wird der "Auftreffwinkel" der Brennerflamme auf der Ablagerungsfläche (Brennerwinkel) vorgegeben und geregelt. Denn es hat sich gezeigt, dass nicht nur der Auftreffpunkt wesentlichen Einfluss auf die geometrische Form der Ablagerungsfläche haben kann, sondern auch der Brennerwinkel. Bei einer Brennerflamme mit schräg zur Mittelachse des Trägers verlaufenden Hauptausbreitungsrichtung ändert sich der Brennerwinkel nicht nur mit dem Abstand zwischen Abscheidebrenner und Ablagerungsfläche, sondern auch bei einem Verkippen der Ablagerungsfläche. Ein derartiges Verkippen kann beispielsweise im Verlauf des Abscheideprozesses mit horizontaler Rotationsachse aufgrund einer Durchbiegung des sich bildenden Quarzglaskörper auftreten. In diesem Fall verläuft die Mittelachse des Quarzglaskörpers azentrisch zur horizontalen Rotationsachse, so dass der Brennerwinkel auf den vorgegeben Sollwert im Bereich zwischen 5 Grad und 85 Grad nachkorrigiert wird. Dadurch wird über der Ablagerungsfläche ein definiertes und konstantes Temperaturprofil aufrechterhalten.

Die "Hauptausbreitungsrichtung" der Brennerflamme stimmt in der Regel mit der Mittelachse des Abscheidebrenners überein. Im Fall eine windschiefen Anordnung von "Hauptausbreitungsrichtung" und Träger-Mittelachse wird der Brennerwinkel aus einer Projektion auf die vertikale Ebene ermittelt, die durch die Träger-Mittelachse verläuft. Zweckmäßigerweise wird der Brennerwinkel auf einem Sollwert zwischen 15 Grad und 75 Grad, vorzugsweise zwischen 30 Grad und 60 Grad, gehalten.

Eine weitere Verbesserung ergibt sich, wenn in Hauptausbreitungsrichtung der Brennerflamme und auf der der Brennerflamme gegenüberliegenden Seite des sich bildenden Quarzglaskörpers eine Absaugung vorgesehen ist. Die Absaugung der Prozessgase erfolgt annähernd in einer geraden Linie mit der Hauptausbreitungsrichtung der Brennerflamme, jedoch schräg zur Träger-Mittelachse. Diese Art der Absaugung hat sich als besonders effektiv erwiesen, um Ablagerungen von SiO₂-Partikeln auf Innenwandungen und Einbauten der Prozesskammer zu vermindern. Beeinträchtigungen des sich bildenden Quarzglaskörpers durch herabfallende oder vagabundierende SiO₂-Ablagerungen werden so vermieden.

Vorteilhafterweise wird eine Ablagerungsfläche erzeugt, die in einem Längsschnitt entlang der Mittelachse gesehen, in Form eines Ellipsenabschnitts um die längere Ellipsenachse ausgebildet ist. Bei einer derartigen Form der Ablagerungsfläche stellt sich ein besonders stabiler VAD-Prozess ein, der die Einhaltung einer vorgegeben Form der Ablagerungsfläche vereinfacht. Eine derartige Ablagerungsfläche zeichnet sich - beispielsweise im Vergleich zu einer Ablagerungsfläche in Form eines Kreisabschnitts - durch einen besonders langsamen Übergang zwischen dem vorderen Bereich der Ablagerungsfläche und der Mantelfläche des Quarzglaskörpers aus; scharfe Übergänge werden so vermieden. Es ist anzunehmen, dass diese Form zu einer homogenen Temperaturverteilung über der Ablagerungsfläche und damit einhergehend zu radial homogeneren Materialeigenschaften beiträgt.

Als günstig hat es sich auch erwiesen, dass der sich bildende Quarzglaskörper mindestens, teilweise mit einer Oberflächenschicht versehen ist, die eine Schichtdicke von mindestens 5 mm und eine Dichte von höchstens 80 % der spezifischen Dichte von Quarzglas aufweist. Aufgrund ihrer Opazität und Porosität weist eine derartige Oberflächenschicht eine bessere Wärmedämmung auf als transparentes Quarzglas. Dadurch wird der Wärmeabfluß über die Mantelfläche des sich bildenden Quarzglaskörpers verringert. Dies erleichtert es, eine rotationssymmetrische und insbesondere homogene Temperaturverteilung aufrechtzuerhalten, wodurch der Abscheideprozess stabilisiert, die Regelung vereinfacht und die Einstellung radial und axial homogener Materialeigenschaften begünstigt wird. Eine derartige Oberflächenschicht ist insbesondere in dem sich an die Ablagerungsfläche anschließenden Bereich der Zylindermantelfläche des Quarzglaskörpers wirksam. Sie wird erhalten, indem die Temperatur im Bereich des Zylindermantels des sich bildenden Quarzglaskörpers vergleichsweise niedrig gehalten wird. Dies wird durch die oben näher beschriebene Ausgestaltung des erfindungsgemäßen Verfahrens begünstigt, bei welcher eine Ablagerungsfläche erzeugt wird, die in einem Längsschnitt entlang der Mittelachse gesehen, in Form eines Ellipsenabschnitts um die längere Ellipsenachse ausgebildet ist.

Das Verfahren wird vorteilhafterweise bei einem VAD-Abscheideverfahren mit einem horizontal orientierten Träger eingesetzt. Hierbei macht sich eine Regelung der Position der Brennerflamme auf der Ablagerungsfläche besonders günstig bemerkbar.

Das erfindungsgemäße Verfahren ermöglicht die reproduzierbare Herstellung von schichtfreien Quarzglaskörpern mit radial und insbesondere mit axial homogenen Materialeigenschaften, insbesondere einer homogenen Verteilung von Hydroxyl- und Si-H-Gruppen und von Wasserstoff und einem axial gleichmäßigen Verlauf der fiktiven Temperatur und homogener Brechungsindex- und Spannungsverteilung.

Hinsichtlich der Vorrichtung wird die oben angegeben Aufgabe ausgehend von der eingangs genannten Vorrichtung erfindungsgemäß dadurch gelöst, dass Mittel zur Beibehaltung der geometrischen Form der Ablagerungsfläche während des Abscheidens vorgesehen sind.

Die erfindungsgemäße Vorrichtung umfasst Mittel, die es ermöglichen, die geometrische Form der Ablagerungsfläche während des Abscheidens beizubehalten. Die Form der Ablagerungsfläche (Kuppengeometrie) wird im wesentlichen durch die Form, die Stöchiometrie und die Hauptausbreitungsrichtung der Brennerflamme, sowie die Position des Auftreffpunkts der Brennerflamme auf der Ablagerungsfläche bestimmt. Geeignete Mittel zum Zweck der Beibehaltung der Kuppengeometrie sind daher insbesondere solche Mittel, die eine gezielte Einstellung und Veränderung von mindestens einem der genannten Parameter erlauben. Dabei können einzelne der genannten Parameter konstant gehalten werden. In jedem Fall ist eine Regelung vorgesehen, mittels der die Kuppengeometrie der Ablagerungsfläche während des Abscheidens konstant gehalten werden kann. Diese Regelung kann "von Hand" erfolgen ― oder "automatisch" anhand eines Regelkreises

Vorteilhafte Ausgestaltungen der erfindungsgemäßen Vorrichtung ergeben sich aus den Unteransprüchen. Auch hierzu wird auf die entsprechenden Erläuterungen zum erfindungsgemäßen Verfahren verwiesen.

Als besonders günstig hat es sich erwiesen, wenn die Mittel eine Positionsregelung umfassen, mittels der die Position der Brennerflamme relativ zur Ablagerungsfläche einstellbar ist.

Unter der "Positionsregelung" wird eine Maßnahme verstanden, mittels der nicht nur der Abstand der Ablagerungsfläche vom Abscheidebrenner in Richtung der Mittelachse, sondern - im Hinblick auf eine Beibehaltung der geometrischen Form der Ablagerungsfläche - auch die Position der Ablagerungsfläche relativ zur Brennerflamme in vorgegebener Weise einstellbar ist. Dadurch kann der Auftreffpunkt der Brennerflamme auf der Ablagerungsfläche reproduzierbar vorgegeben werden. Beispielsweise kann die Brennerflamme in einem vorgegebenen Bewegungsablauf über der Ablagerungsfläche geführt werden, mit der Maßgabe, dass die geometrische Form der Ablagerungsfläche beibehalten wird. Im einfachsten Fall wird die Position des Auftreffpunkts auf der Ablagerungsfläche mittels der Positionsregelung nur im Falle einer Abweichung der Kuppengeometrie von einer vorgegebenen Sollform verändert.

Die erfindungsgemäße Positionsregelung erweist sich als vorteilhaft, wenn es im Verlauf des Abscheideprozesses ― etwa wegen der Erwärmung der Umgebung und aufgrund zunehmendem Volumen und Gewicht des sich bildenden Quarzglaskörpers - zu Änderungen der Positionen zwischen Brennerflamme und Ablagerungsfläche zueinander und damit zu Änderungen der radialen Temperaturverteilung mit den oben erläuterten Folgen kommt. Insbesondere bei einem VAD-Prozess mit horizontaler Rotationsachse kann sich der Quarzglaskörper mit zunehmender Länge durchbiegen, was sich insbesondere in einer Verschiebung der Ablagerungsfläche in Bezug auf die Brennerflamme auswirkt.

Mittels der Positionsregelung lässt sich eine konstante Kuppengeometrie der Ablagerungsfläche während des Abscheideprozesses besonders einfach aufrechterhalten und somit unerwünschte axiale Gradienten in den Materialeigenschaften vermeiden. Dies gelingt insbesondere durch die oben erläuterte Einstellung der relativen Position zwischen Brennerflamme und Ablagerungsfläche. Hinsichtlich der Wirkungen einer derartigen Regelung wird auf die obigen Erläuterungen zum erfindungsgemäßen Verfahren verwiesen.

Eine weitere Verbesserung hinsichtlich der Reproduzierbarkeit des VAD-Verfahrens ergibt sich bei Einsatz einer Ausführungsform der erfindungsgemäßen Vorrichtung, bei der die Brennerflamme derart auf die Ablagerungsfläche gerichtet ist, dass die Hauptausbreitungsrichtung der Brennerflamme und die Mittelachse des Trägers einen Brennerwinkel im Bereich zwischen 5 Grad und 85 Grad einschließen, wobei der Abscheidebrenner mit einer anhand der Positions-Regelung regelbaren Verstelleinrichtung verbunden ist. Mittels der Verstelleinrichtung ist der Abscheidebrenner verschiebbar um eine Drehachse kippbar.

In dieser Hinsicht hat es sich besonders bewährt, wenn der Brennerwinkel auf einem Sollwert zwischen 15 Grad und 75 Grad, vorzugsweise zwischen 30 Grad und 60 Grad, regelbar ist.

Unbeabsichtigte Einflüsse durch vagabundierende SiO₂-Ablagerungen lassen sich durch eine Ausgestaltung der erfindungsgemäßen Vorrichtung, bei der in Hauptausbreitungsrichtung der Brennerflamme und auf der der Brennerflamme gegenüberliegenden Seite des sich bildenden Quarzglaskörpers eine Absaugung vorgesehen ist, vermeiden.

Die Erfindung wird nachfolgend anhand eines Ausführungsbeispiels und einer Zeichnung näher erläutert. In der Zeichnung zeigen in schematischer Darstellung im einzelnen
- **Figur 1**: eine Ausführungsform der erfindungsgemäßen Vorrichtung in einer Seitenansicht,
- **Figur 2**: eine Detailansicht der Ablagerungsfläche des in Figur 1 gezeigten Quarzglaskörpers, und
- **Figur 3**: eine von der Ablagerungsfläche nach Figur 2 aufgenommene Abbildung und ein Verfahren zur Ermittlung einer Maßzahl für eine Kuppenkontur.

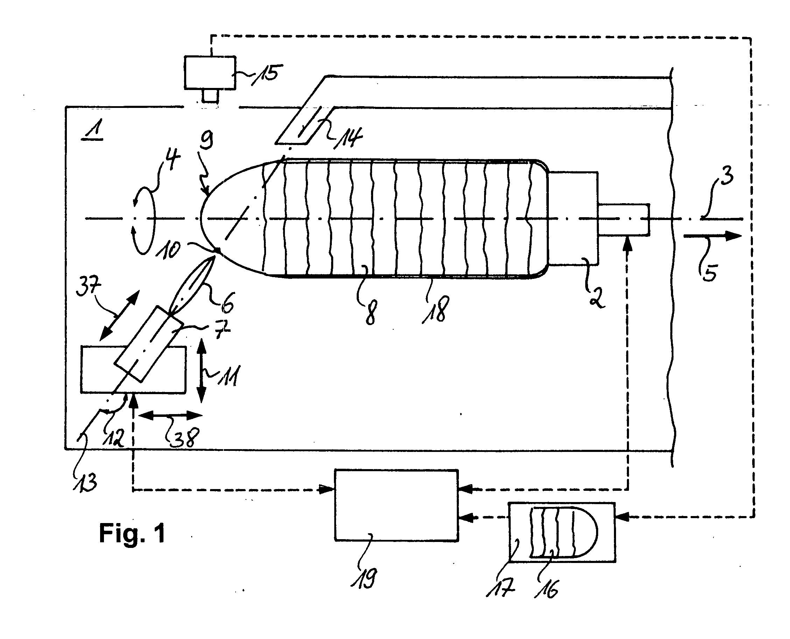

Bei der Vorrichtung gemäß **Figur 1** ist innerhalb einer Abscheidekammer 1 ein Träger 2 angeordnet, der um eine horizontale Mittelachse 3 rotierbar und in axialer Richtung mit geregelter Abzugsgeschwindigkeit verschiebbar ist, wie dies die Richtungspfeile 4 und 5 andeuten.

In der Brennerflamme 6 eines Flammhydrolysebrenners 7 werden aus siliziumhaltigem Ausgangsstoff und Sauerstoff SiO₂-Partikel gebildet und auf dem Träger 2 unter Bildung eines Quarzglaskörpers 8 abgeschieden. Die Zylindermantelfläche des Quarzglaskörpers 8 ist mit einer porösen Sootschicht 18 aus unverglasten oder teilverglasten SiO₂-Partikeln belegt, die als Wärmeisolator wirkt und ein rasches Abkühlen verhindert.

Die Brennerflamme 6 ist von schräg unten gegen das stirnseitige Ende des Quarzglaskörpers 8 gerichtet, so dass sich dort eine ellipsoidförmige und im Querschnitt ovale Ablagerungsfläche 9 ausbildet.

Die Hauptausbreitungsrichtung der Brennerflamme 6 stimmt mit der Längsachse 13 des Flammhydrolysebrenners 6 überein. Sie schließt mit der Mittelachse 3 einen Winkel α von etwa 60 Grad ein. Der Auftreffpunkt der Brennerflamme 6 auf der Ablagerungsfläche 9 ist in Figur 1 mit der Bezugsziffer 10 bezeichnet.

Der Flammhydrolysebrenner 7 ist in vertikaler Richtung auf und ab bewegbar und zur Vertikalen verkippbar, wie dies durch die Richtungspfeile 11 und 12 angezeigt ist, und er ist horizontal in axilaer Richtung (in Bezug auf den Quarzglaskörper) und in radialer Richtung (in Bezug auf den Quarzglaskörper) verschiebbar, wie dies die Richtungspfeile 37 bzw. 38 andeuten.

In der Verlängerung der Längsachse 13 (Hauptausbreitungsrichtung) ist gegenüber dem Quarzglaskörper 8 ein Abzug 14 vorgesehen.

Mit einer CCD-Kamera 15 wird das seitliche Profil der Ablagerungsfläche 9 optisch erfasst und das Abbild 16 der Ablagerungsfläche 9 mittels einer digitalen Bildverarbeitung 17 ausgewertet. Die Kamera 15 ist in Höhe der Mittellinie 3 angeordnet und in einem Winkel von 90 Grad auf diese gerichtet.

Die mittels der digitalen Bildverarbeitung 17 ausgewerteten Informationen werden einer Regelung 19 zugeführt. Die Regelung 19 ist mit der Positioniereinrichtung (11; 12) für den Abscheidebrenner 7 und mit dem Abzug für den Quarzglaskörper 8 verbunden. Datenleitungen sind in Figur 1 anhand gestrichelter Linien erkennbar.

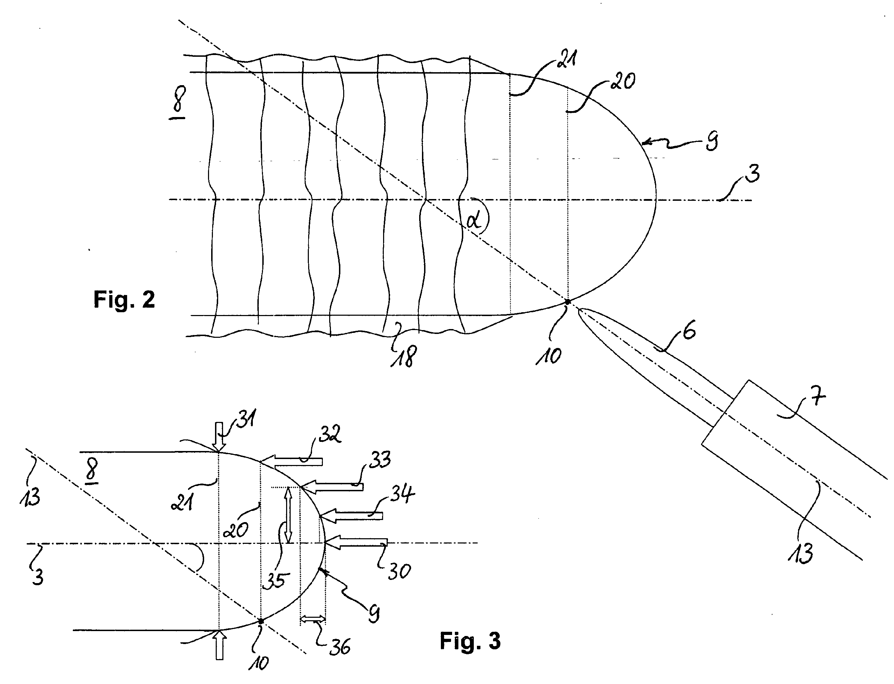

In der Detailansicht der Ablagerungsfläche 9 gemäß **Figur 2** sind für die Bezeichnung der einzelnen Elemente des Quarzglaskörpers 8 und der Bestandteile der Vorrichtung die gleichen Bezugsziffern verwendet wie in Figur 1. Zusätzlich sind auf der Ablagerungsfläche 9 zwei punktierte Linien eingezeichnet, wovon die vordere Linie 20 den Durchmesser der Ablagerungsfläche 9 im Bereich des Auftreffpunkts 10 und die hintere Linie 21 den Durchmesser des Quarzglaskörpers 8 angibt.

Das mittels der Kamera 15 aufgenommene Abbild 16 der Ablagerungsfläche 9 ist in **Figur 3** dargestellt. Dieses wird mittels der Bildverarbeitung 17 ausgewertet. Die Auswertung umfasst die Festlegung der Mittelachse 3 (Blockpfeil 30) als halbe Strecke zwischen den Blockpfeilen 31. Gleichzeitig wird aus dem Abstand zwischen den Blockpfeilen 31 der Durchmesser (Linie 21) des Quarzglaskörpers 8 laufend ermittelt.

Außerdem umfasst die Auswertung mittels der Bildverarbeitung 17 die Ermittlung des Punktes 32 (und damit die Länge der Linie 20). Der Punkt 32 ist durch den Auftreffpunkt der Brennerflamme 6 (Blockpfeil 32) definiert. Die Lage des Punkte 32 (und damit die Länge der Linie 20) wird auf einem vorgegebenen Sollwert gehalten, indem bei einer Abweichung vom Sollwert die Abzugsgeschwindigkeit mittels der Regelung 19 entsprechend geändert wird.

Zur Ermittlung der Krümmung der Ablagerungsfläche 9 dient ein Messprofil, dessen Ermittlung durch die Messpunkte 30, 33 und 34 (auch symbolisiert durch die Blockpfeile 30, 33, und 34) angedeutet wird. Bei vorgegebenen, festen radialen Abständen (beispielhaft: Abstandspfeil 35) zwischen den Messpunkten 30, 33, und 34, sind die jeweiligen axialen Abstände (beispielhaft: Abstandspfeil 36) ein Maß für die Krümmung der Ablagerungsfläche 9 in diesem Bereich.

Nachfolgend wird das erfindungsgemäße Verfahren anhand eines Ausführungsbeispiels und anhand der Figuren 1 bis 3 näher erläutert:

Die Abzugsgeschwindigkeit für den Quarzglaskörper 8 wird auf einen anfänglichen Wert von 30 mm/h eingestellt und die Rotationsgeschwindigkeit wird konstant bei 10 U/min gehalten. Dem Flammhydrolysebrenner 7 werden ein siliziumhaltiger Ausgangsstoff (SiCl₄, Silane, Siloxane) ), Sauerstoff und Wasserstoff zugeführt und daraus in der Brennerflamme 6 SiO₂-Partikel gebildet, diese auf dem Träger 2 unter Bildung des Quarzglaskörpers 8 abgeschieden und bei einer Temperatur von ca. 1900 °C direkt verglast. Der Quarzglaskörper 8 hat einen Außendurchmesser von 120 mm. Seine Zylindermantelfläche ist mit einer ca. 6 mm dicken, porösen Sootschicht 18 aus teilverglasten SiO₂-Partikeln belegt, die als Wärmeisolator wirkt und ein rasches Abkühlen verhindert.

Nach einer Anziehphase von einigen Minuten bildet sich auf dem rotierenden Träger 2 eine ellipsoidförmige und im Querschnitt ovale Ablagerungsfläche 9 aus. Deren geometrische Form wird während des weiteren Abscheideprozesses konstant gehalten. Die dafür getroffenen Maßnahmen werden nachfolgend beschrieben:

Mittels der CCD-Kamera 15 wird das seitliche Profil der Ablagerungsfläche 9 kontinuierlich erfasst und die Kuppenkontur 16 (Abbildung) der Ablagerungsfläche 9 mittels der digitalen Bildverarbeitung 17 ausgewertet. Hierzu wird die Mittelachse 3 (Blockpfeil 30) als halbe Strecke zwischen den Blockpfeilen 31 festgelegt und gleichzeitig aus dem Abstand zwischen den Blockpfeilen 31 der Durchmesser (Linie 21) des Quarzglaskörpers 8 laufend ermittelt.

Außerdem wird die Länge der Linie 20, deren Lage durch den Auftreffpunkt 10 der Brennerflamme 6 (Blockpfeil 32) definiert ist ermittelt. Die gemessene Position des Messpunktes 32 (Ist-Länge der Linie 20) wird der Regelung 19 zugeführt und mit einem vorgegebenen Sollwert verglichen. Im Fall einer Abweichung vom Sollwert wird die Abzugsgeschwindigkeit geändert. Dies ist darin begründet, dass bei konstanter Form der Ablagerungsfläche 9 die Position des Messpunktes 32 (Länge der Linie 20) ein Maß für den Abstand zwischen Brennerflamme 9 und Ablagerungsfläche 9 ist. Bei einer Soll/Ist-Abweichung entgegen der Abzugsrichtung 5 (Länge der Linie 21 oberhalb des Sollwerts) ist der Sollabstand zwischen Brennerflamme 6 und Ablagerungsfläche 9 unterschritten, so dass die Abzugsgeschwindigkeit erhöht wird wird. Entsprechend ist bei einer Soll/Ist-Abweichung in Abzugsrichtung 5 (Länge der Linie 21 unterhalb des Sollwerts) der Sollabstand zwischen Brennerflamme 6 und Ablagerungsfläche 9 überschritten, so dass die Abzugsgeschwindigkeit verringert wird. Auf diese Art und Weise lässt sich der Abstand zwischen Abscheidebrenner 7 und Ablagerungsfläche 9 auf 50 µm genau regeln. Darüber hinaus wird ein kontinuierlicher und gleichmäßiger Abzug gewährleistet, so dass Schichten im Quarzglaskörper 8 vermieden werden.

Außerdem wird mittels der digitalen Bildverarbeitung die aktuelle Krümmung der Ablagerungsfläche 9 anhand des durch die Messpunkte 30, 33, und 34 dargestellten Messprofils ausgewertet. Im konkreten Fall, der durch den Abbildungsmaßstab der Kuppenkontur 16 bestimmt ist, wird zunächst der Messpunkt 33 auf der Kuppenkontur 16 in einem vorgegebenen Abstand von 6 mm von der Mittellinie (Messpunkt 30) und daraus der axiale Abstand (Abstandspfeil 36) zwischen den Messpunkten 30 und 33 ermittelt. Dieser axiale Abstand wird auf einem vorgegebenen Sollwert gehalten denn er ist ein Maß für die Krümmung der Ablagerungsfläche 9 in diesem Bereich. Der so ermittelte Istwert für den axialen Abstand wird daher der Regelung 19 zugeführt und mit dem Sollwert vergliche. Im Fall einer Abweichung werden Gegenmaßnahmen wie folgt ergriffen: Bei einer zu starken Krümmung wird der Abscheidebrenner 7 vertikal nach unten bewegt; bei einer zu schwachen Krümmung vertikal noch oben (Richtungspfeil 11).

Zur Ermittlung der Krümmung der Ablagerungsfläche 9 dient ein Messprofil, dessen Ermittlung durch de Blockpfeile 30, 33, und 34 angedeutet wird. Bei vorgegebenen, festen radialen Abständen (beispielhaft: Abstandspfeil 35) zwischen den Messpunkten, wie durch die Blockpfeile 30, 33, und 34 symbolisiert, sind die jeweiligen axialen Abstände (beispielhaft: Abstandspfeil 36) ein Maß für die Krümmung der Ablagerungsfläche 9 in diesem Bereich. Die Messpunkte 30, 33 und 34 befinden sich im vorderen Teil der Ablagerungsfläche 9, wo Änderungen der Krümmung frühzeitig erkennbar sind. Im Fall einer Abweichung der gemessenen Krümmung von einem vorgegebenen Sollwert oder im Fall einer zeitlichen Veränderung der Krümmung werden Gegenmaßnahmen ergriffen, indem bei einer zu starken Krümmung der Flammhydrolysebrenner 7 vertikal nach unten bewegt wird, und bei einer zu schwachen Krümmung vertikal noch oben (Richtungspfeil 11).

Durch die fortlaufende Erfassung der Kuppenkontur und die erläuterte Regelung der Position des Flammhydrolysebrenners 7 lässt sich die geometrische Form der Ablagerungsfläche 9 während des gesamten Abscheideprozesses beibehalten. Im Ausführungsbeispiel wird die Position des Flammhydrolysebrenners 7 durch Verstellung des Brennerwinkels (Richtungspfeil 12) und der Brennerhöhe (Richtungspfeil 11) geregelt. Alternativ oder ergänzend dazu kann die geometrische Form der Ablagerungsfläche auch durch Verschiebung des Flammhydrolysebrenners 7 in axialer Richtung (Richtungspfeil 38) und in radialer Richtung (Richtungspfeil 37) eingestellt und korrigiert werden.

Da sich die Messpunkte 30, 33 und 34 im vorderen Teil der Ablagerungsfläche 9 befinden, sind Änderungen der Krümmung frühzeitig erkennbar. Das erfindungsgemäße Verfahren ermöglicht somit die Herstellung eines Quarzglaskörpers 8 mit axial homogenen Materialeigenschaften. Im Ausführungsbeispiel hat der Einstellmechanismus für die "Abstandsregelung" Vorrang vor dem Einstellmechanismus für die "Beibehaltung der Kuppenform".

## Patentansprüche

1. Verfahren für die Herstellung eines Quarzglaskörpers, indem einem Abscheidebrenner (7) eine siliziumhaltige Ausgangsverbindung zugeführt, in einer dem Abscheidebrenner (7) zugeordneten Brennerflamme (6) daraus SiO₂-Partikel gebildet, diese auf einer kuppenförmigen Ablagerungsfläche (9) eines um eine Mittelachse (3) rotierenden und mit geregelter Abzugsgeschwindigkeit in Richtung der Mittelachse (3) abgezogenen Trägers (2) abgeschieden und unter Bildung des Quarzglaskörpers (8) verglast werden, wobei der Abstand zwischen dem Abscheidebrenner (7) und der Ablagerungsfläche (9) geregelt wird, **dadurch gekennzeichnet, dass** die geometrische Form der Ablagerungsfläche (9) während des Abscheidens beibehalten wird.

2. Verfahren nach Anspruch 1, **dadurch gekennzeichnet, dass** Form, Stöchiometrie und Hauptausbreitungsrichtung der Brennerflamme (6), sowie die Position des Auftreffpunkts (10) der Brennerflamme (6) auf der Ablagerungsfläche (9) derart eingestellt werden, dass die geometrische Form der Ablagerungsfläche (9) während des Abscheidens beibehalten wird.

3. Verfahren nach Anspruch 1 oder 2, **dadurch gekennzeichnet, dass** die Position des Auftreffpunkts (10) der Brennerflamme (6) auf der Ablagerungsfläche (9) geregelt wird.

4. Verfahren nach Anspruch 2, **dadurch gekennzeichnet, dass** die Position des Auttreffpunkts (10) der Brennerflamme (6) auf der Ablagerungsfläche (9) konstant gehalten wird.

5. Verfahren nach einem der vorhergehenden Ansprüche, **dadurch gekennzeichnet, dass** durch optische Abbildung von mindestens einem Teil der Ablagerungsfläche (9) eine Kuppenkontur (16) erhalten, und daraus ein Maß für die aktuelle geometrische Form der Ablagerungsfläche (9) ermittelt wird.

6. Verfahren nach Anspruch 5, **dadurch gekennzeichnet, dass** das Maß anhand einer Messvorschrift ermittelt wird, die eine Ermittlung mindestens zweier voneinander beabstandeter Messpunkte (30, 33) auf der Kuppenkontur (16) umfasst, wovon der erste Messpunkt (30) auf Höhe der Mittellinie (3), und der zweite Messpunkt (33) mit vorgegebenem radialen Abstand (35) von der Mittellinie (3) ermittelt wird.

7. Verfahren nach einem der vorhergehenden Ansprüche, **dadurch gekennzeichnet, dass** zur Beibehaltung der geometrischen Form der Ablagerungsfläche (9) eine Positionsregelung vorgesehen ist, bei der die Abzugsgeschwindigkeit oder die Position des Abscheidebrenners (7) als Stellgröße herangezogen werden.

8. Verfahren nach einem der vorhergehenden Ansprüche, **dadurch gekennzeichnet, dass** die Brennerflamme (6) derart auf die Ablagerungsfläche (9) gerichtet ist, dass die Hauptausbreitungsrichtung (13) der Brennerflamme (6) und die Mittelachse (3) des Trägers (2) einen Brennerwinkel (α) im Bereich zwischen 5 Grad und 85 Grad einschließen und dass der Brennerwinkel (α) auf einem vorgegebenen Sollwert gehalten wird.

9. Verfahren nach Anspruch 7, **dadurch gekennzeichnet, dass** der Brennerwinkel (α) auf einem Sollwert zwischen 15 Grad und 75 Grad, vorzugsweise zwischen 30 Grad und 60 Grad, gehalten wird.

10. Verfahren nach Anspruch 7 oder 8, **dadurch gekennzeichnet, dass** in Hauptausbreitungsrichtung (13) der Brennerflamme (6) und auf der der Brennerflamme (6) gegenüberliegenden Seite des sich bildenden Quarzglaskörpers (8) eine Absaugung (14) vorgesehen ist.

11. Verfahren nach einem der vorhergehenden Ansprüche, **dadurch gekennzeichnet, dass** eine Ablagerungsfläche (9) erzeugt wird, die in einem Längsschnitt entlang der Mittelachse (3) gesehen, in Form eines Ellipsenabschnitts um die längere Ellipsenachse ausgebildet ist.

12. Verfahren nach einem der vorhergehenden Ansprüche, **dadurch gekennzeichnet, dass** der sich bildende Quarzglaskörper (8) mit einer Oberflächenschicht (18) aus porösem SiO₂ versehen ist, die eine Schichtdicke von mindestens 5 mm und eine Dichte von höchstens 80 % der spezifischen Dichte von Quarzglas aufweist.

13. Verfahren nach einem der vorhergehenden Ansprüche, **dadurch gekennzeichnet, dass** der Träger (2) horizontal orientiert ist.

14. Vorrichtung zur Herstellung eines Quarzglaskörpers, mit einem um eine Mittelachse (3) rotierbaren Träger (2), der mittels einer Verschiebevorrichtung mit regelbarer Abzugsgeschwindigkeit in Richtung der Mittelachse (2) verschiebbar ist, mit einem Abscheidebrenner (7) zur Erzeugung von SiO₂-Partikeln in einer dem Abscheidebrenner (7) zugeordneten Brennerflamme (6), mittels dem auf einer kuppenförmigen Ablagerungsfläche (9) des Trägers (2) SiO₂-Partikel abgeschieden und unter Bildung des Quarzglaskörpers (8) verglast werden, mit einer auf die Ablagerungsfläche (9) gerichteten optischen Erfassungseinrichtung (15), und mit einer Regeleinrichtung (19) zur Regelung des Abstands zwischen dem Abscheidebrenner (7) und der Ablagerungsfläche (9), **dadurch gekennzeichnet, dass** Mittel (11; 12; 17; 19; 37; 38) zur Beibehaltung der geometrischen Form der Ablagerungsfläche (9) während des Abscheidens vorgesehen sind.

15. Vorrichtung nach Anspruch 13, **dadurch gekennzeichnet, dass** die Mittel eine Positiönsregelung (19) umfassen, mittels der die Position der Brennerflamme (6) relativ zur Ablagerungsfläche (9) einstellbar ist.

16. Vorrichtung nach Anspruch 14, **dadurch gekennzeichnet, dass** die Brennerflamme (6) derart auf die Ablagerungsfläche (9) gerichtet ist, dass die Hauptausbreitungsrichtung (13) der Brennerflamme (6) und die Mittelachse (3) des Trägers (2) einen Brennerwinkel (α) im Bereich zwischen 5 Grad und 85 Grad einschließen und dass der Abscheidebrenner (7) mit einer anhand der Positionsregelung regelbaren Verstelleinrichtung (11; 12; 37; 38) verbunden ist.

17. Vorrichtung nach Anspruch 15, **dadurch gekennzeichnet, dass** der Brennerwinkel (α) auf einem Sollwert zwischen 15 Grad und 75 Grad, vorzugsweise zwischen 30 Grad und 60 Grad, regelbar ist.

18. Vorrichtung nach einem der Ansprüche 13 bis 16, **dadurch gekennzeichnet, dass** in Hauptausbreitungsrichtung (13) der Brennerflamme (6) und auf der der Brennerflamme (6) gegenüberliegenden Seite des sich bildenden Quarzglaskörpers (8) eine Absaugung (14) vorgesehen ist.
